Europäisches Patentamt

European Patent Office

Office européen des brevets

(19)

(11) **EP 0 774 651 A2**

(12) **EUROPÄISCHE PATENTANMELDUNG**

(43) Veröffentlichungstag:
    21.05.1997 Patentblatt 1997/21

(51) Int. Cl.$^6$: **G01L 13/06**

(21) Anmeldenummer: 96115912.6

(22) Anmeldetag: 04.10.1996

(84) Benannte Vertragsstaaten:
    **AT CH DE FR IT LI NL**

(30) Priorität: **14.11.1995 CH 3222/95**

(71) Anmelder: **Landis & Gyr Technology Innovation AG**
    **6301 Zug (CH)**

(72) Erfinder:
    • **Mannhart, Jevgenij**
      **6330 Cham (CH)**
    • **Bichsel, Jürg**
      **6314 Unterägeri (CH)**

(54)    **Differenzdrucksensor**

(57)    Ein Differenzdrucksensor weist zwei Membrane (5; 6) auf, die entlang einer vorbestimmten Achse (7) auslenkbar sind. Die Auslenkung wenigstens einer der Membranen (5; 6) ist proportional zur Druckdifferenz $p_1$ - $p_2$. Zur Detektion der Auslenkung der Membranen (5; 6) sind zwei Spulen (8; 9) vorgesehen. Bei einer Änderung der Druckdifferenz $p_1$ - $p_2$ bewegen sich die beiden Membranen (5; 6) in entgegengesetzter Richtung. Eine Änderung der Lage des Druckdifferenzsensors bzw. der Temperatur kann dazu führen, dass sich die Membranen (5; 6) unter dem Einfluss der Gravitation bzw. der Temperatur leicht deformieren. Dabei ändert sich der Abstand $x_1$ bzw. $x_2$ zwischen den Membranen (5; 6) und den Spulen (8; 9) in gleicher Weise, so dass die Differenzdruckmessung nicht beeinflusst wird.

Fig.5

**Beschreibung**

Die Erfindung betrifft einen Differenzdrucksensor der im Oberbegriff des Anspruchs 1 genannten Art.

Solche Differenzdrucksensoren eignen sich beispielsweise zur Erfassung der Geschwindigkeit eines gasförmigen oder flüssigen strömenden Mediums. Sie können als alleinstehende Geräte ausgebildet oder zur Zusammenarbeit mit einem externen Regler oder einem Gebäudeleitsystem vorgesehen sein.

Aus der deutschen Patentschrift DE 29 46 062 ist eine Messzelle für Druck oder Differenzdruck bekannt, bei der eine Spule zur Messung der Auslenkung einer metallischen Membrane vorgesehen ist. Die Messung der Auslenkung beruht auf dem Wirbelstromverfahren.

Der Erfindung liegt die Aufgabe zugrunde, einen Differenzdrucksensor vorzuschlagen, dessen Ausgangssignal unabhängig von der Einbaulage und von der aktuellen Umgebungstemperatur ist.

Es hat sich nämlich gezeigt, dass das Ausgangssignal eines in Feinwerktechnik hergestellten Differenzdrucksensors mit zwei Druckkammern, die durch eine entlang einer vorbestimmten Achse auslenkbare Membrane getrennt sind, erstens lage- und zweitens temperaturabhängig ist. Der Grund liegt darin, dass einerseits die Auslenkung der Membrane durch Gravitationskräfte beeinflusst wird und dass andererseits die geometrische Form der Membrane temperaturabhängig ist. Dies führt insbesondere bei der Messung von kleinen Druckdifferenzen in der Grössenordnung von 100 Pascal zu inakzeptabel grossen Messfehlern.

Die Lösung der Aufgabe gelingt mit einem Differenzdrucksensor, der eine aus zwei Druckkammern und einer ersten Membrane, die in einer vorbestimmten Richtung auslenkbar ist, gebildete erste Druckmesszelle und eine aus zwei weiteren Druckkammern und einer zweiten, identischen Membrane, die ebenfalls entlang der gleichen Richtung auslenkbar ist, gebildete zweite Druckmesszelle aufweist. Zur Detektierung der Auslenkung der Membranen sind zwei Spulen vorgesehen. Die vier Druckkammern werden so mit den Drücken $p_1$ und $p_2$ gespeist, dass sich die beiden Membranen bei einer Änderung der Druckdifferenz $p_1 - p_2$ in entgegengesetzter Richtung bewegen. Unter dem Einfluss von Gravitationskräften bewegen sich die Membranen hingegen in die gleiche Richtung. Das Signal eines solchen Differenzdrucksensors ist somit unabhängig von seiner Lage. Bei einer Weiterbildung der Erfindung führen auch temperaturbedingte Deformationen der Membranen zu keiner Änderung des Differenzdrucksignals.

Die Erfindung ist im Anspruch 1 gekennzeichnet. Weiterbildungen der Erfindung ergeben sich aus den abhängigen Ansprüchen. Nachfolgend werden Ausführungsbeispiele der Erfindung anhand der Zeichnung näher erläutert. Es zeigen:

Fig. 1      schematisch einen Differenzdrucksensor mit vier Druckkammern,
Fig. 2      einen Differenzdrucksensor mit drei Druckkammern,
Fig. 3      Einzelheiten eines eine Seitenwand einer Druckkammer bildenden Ringes,
Fig. 4      eine elektronische Schaltung, die die von zwei Spulen erzeugten Signale parallel verstärkt und summiert.
Fig. 5, 6   einen Differenzdrucksensor, bei dem die Druckkammern beidseitig einer Leiterplatte gebildet sind,
Fig. 7      eine elektronische Schaltung, die das Signal von zwei in Reihe geschalteten Spulen verstärkt,
Fig. 8      einen Differenzdrucksensor, bei dem die Druckkammern auf der Oberseite einer Leiterplatte gebildet sind, und
Fig. 9      einen Differenzverstärker.

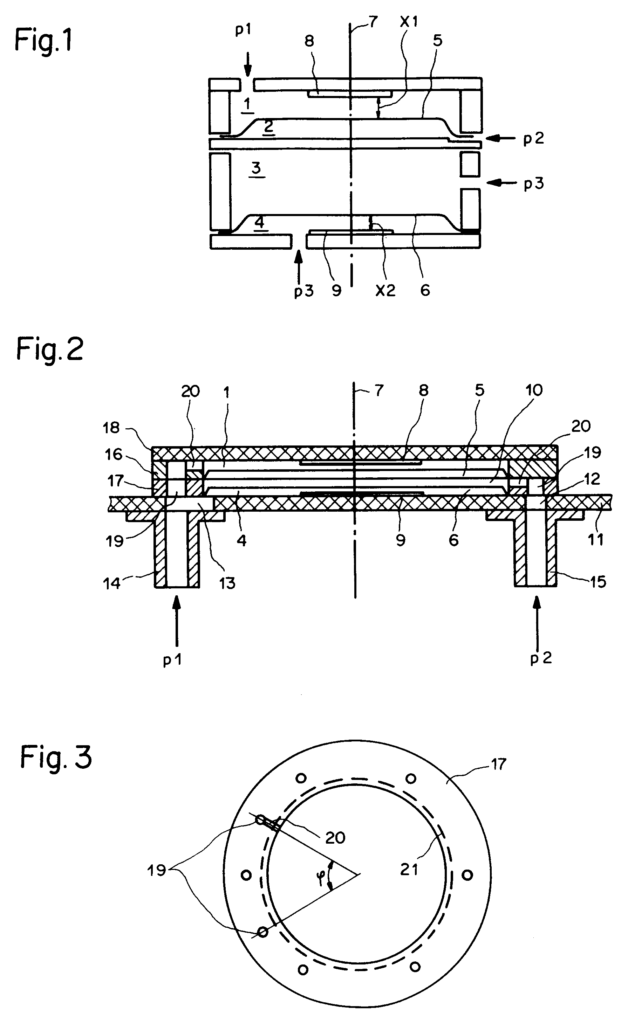

Die Fig. 1 zeigt schematisch einen Differenzdrucksensor mit vier Druckkammern 1- 4. Die erste und die zweite Druckkammer 1, 2 sind durch eine erste Membrane 5, die dritte und die vierte Druckkammer 3, 4 durch eine zweite Membrane 6 getrennt. Beide Membranen 5, 6 sind identischer Bauart und entlang derselben Achse 7 auslenkbar. Zur Messung der Auslenkung der Membranen 5, 6 sind zwei Spulen 8 bzw. 9 vorgesehen, wobei der Abstand zwischen der ersten Membrane 5 und der ersten Spule 8 mit $x_1$ bezeichnet und der Abstand zwischen der zweiten Membrane 6 und der zweiten Spule 9 mit $x_2$ bezeichnet ist. Die Spulen 8, 9 sind nun bezüglich der Membrane 5 bzw. 6 so angeordnet, dass sich in Richtung der Achse 7 die erste Spule 8 auf der einen Seite der ersten Membrane 5, die zweite Spule 9 hingegen auf der anderen Seite der zweiten Membrane 6 befindet.

Die Spulen 8 und 9 sind vorteilhafterweise auf Leiterplatten in der Form von Leiterbahnen integrierte, spiralförmige Flachspulen, da solche Spulen mit geringer Streuung ihrer Eigenschaften und kostengünstig herstellbar sind. Von Vorteil ist es, wenn die Abstände $x_1$ und $x_2$ etwa gleich gross sind, damit bei verschwindender Druckdifferenz beide Spulen 8, 9 ein Signal $S_1$ bzw. $S_2$ mit vergleichbarer Amplitude und vergleichbarer Steilheit $dS_1/dx_1$ bzw. $dS_2/dx_2$ liefern.

Wenn der Abstand $x_1$ der ersten Membrane 5 von der ersten Spule 8 unter dem Einfluss von Gravitationskräften zunimmt, dann nimmt das Signal $S_1$ der ersten Spule 8 um einen Wert $\delta S_1$ zu. Gleichzeitig nimmt unter dem Einfluss derselben Gravitationskräfte der Abstand $x_2$ der zweiten Membrane 6 von der zweiten Spule 9 ab und damit nimmt deren Signal $S_2$ um den gleichen Wert $\delta S_2 = \delta S_1$ ab. Das Summensignal $S = S_1 + S_2$ hingegen bleibt konstant: es ist unabhängig von der Lage des Differenzdrucksensors im Schwerefeld der Erde. Bei einer temperaturbedingten Veränderung der geometrischen Form der Membranen 5 und 6 nimmt ebenfalls der eine Abstand $x_1$ oder $x_2$ zu und der andere ab. Da die beiden Membranen 5, 6 identischer Bauart sind, sind die Änderungen der Abstände $x_1$ und $x_2$ gleich

gross, so dass das Summensignal S auch temperaturunabhängig ist. Durch den kompakten Aufbau, bei der die vier Druckkammern 1- 4 übereinander angeordnet sind, wird erreicht, dass die beiden Membranen 5, 6 bei Temperatursprüngen in möglichst kurzer Zeit die gleiche Temperatur erreichen.

Die Fig. 1 zeigt den Differenzdrucksensor in einer Ausführung, bei der den Druckkammern 1 und 2 der Druck $p_1$ bzw. $p_2$ zugeführt wird, so dass das von der Spule 8 gelieferte Signal $S_1$ proportional zur Druckdifferenz p1- p2 ist. Den Druckkammern 3 und 4 wird der gleiche Druck $p_3$ zugeführt. Die Druckkammern 3 und 4 können z.B. mit Öffnungen versehen sein, so dass in beiden Druckkammern 3 und 4 der gleiche, in der Umgebung gerade herrschende Druck $p_3$ vorhanden ist. Das von der Spule 9 gelieferte Signal $S_2$ ist somit nur von der Einbaulage und der Umgebungstemperatur, nicht aber vom Differenzdruck p1- p2 abhängig. Das Summensignal $S = S_1 + S_2$ ist proportional zur Druckdifferenz p1 - p2 und unabhängig von der Lage des Differenzdrucksensors und unabhängig von temperaturbedingten Deformationen der Membrane 5. Die dritte und vierte Druckkammer 3, 4 und die zweite Membrane 6 bilden hier einen Referenzsensor.

Das Nutzsignal S verdoppelt sich, wenn der Druckkammer 3 ebenfalls der Druck $p_2$ und der Druckkammer 4 der Druck $p_1$ zugeführt wird. Bei einer Änderung der Druckdifferenz p1- p2 verkleinern oder vergrössern sich beide Abstände $x_1$ und $x_2$ in gleicher Weise. Bei einer Lageänderung des Differenzdrucksensors oder bei Temperaturänderungen hingegen vergrössert sich der eine Abstand $x_1$ oder $x_2$ und verkleinert sich der andere Abstand $x_2$ bzw. $x_1$.

Es gibt naturgemäss unzählige weitere konstruktive Möglichkeiten, um die Spulen 8, 9 bezüglich der Membranen 5, 6 im obengenannten Sinne anzuordnen.

Die Fig. 2 zeigt den Differenzdrucksensor in einer weiteren Ausführung, bei der die zweite und die dritte Druckkammer 2, 3 (Fig. 1) zu einer einzigen Druckkammer 10 zusammengefasst sind. Der ersten und vierten Druckkammer 1, 4 ist der Druck $p_1$, der zusammengefassten Druckkammer 10 der Druck $p_2$ zuführbar. Der Differenzdrucksensor umfasst eine erste Leiterplatte 11, die mit sechs, auf einem Kreis in Winkelabständen von 60° angeordneten, runden Bohrungen versehen ist. Die Leiterplatte 11 weist eine weitere runde und eine elliptische Bohrung 12 bzw. 13 auf die um einen Winkel φ = 60° verdreht im gleichen Radialabstand zwischen den anderen Bohrungen angebracht sind. Die Fig. 2 zeigt den Differenzdrucksensor nicht in einem Schnitt entlang einer Geraden, sondern so, dass die beiden nur um den Winkel φ = 60° auseinanderliegenden Bohrungen 12, 13 dargestellt sind. Auf der unteren Seite der Leiterplatte 11 sind über den Bohrungen 12, 13 zwei Stutzen 14, 15 zur Zuführung der Drucke p1 und p2 luftdicht aufgelötet. Der Differenzdrucksensor umfasst weiter zwei identisch und vorzugsweise aus Metall gebildete Ringe 16, 17 und eine zweite Leiterplatte 18, die alle in den gleichen Radialabständen wie die erste Leiterplatte 11 sechs Bohrungen aufweisen. Zudem weisen die Ringe 16, 17, wie in der Fig. 3 zu sehen ist, zwei weitere runde Bohrungen 19 auf, die winkelmässig ebenfalls um φ = 60° versetzt sind. Die zweite Bohrung 19 ist mit einer Kerbe 20 versehen, die gegen das Innere des Ringes 16 bzw. 17 gerichtet ist. Weiter sind die Ringe 16, 17 mit einer an das Innere angrenzenden Vertiefung 21 ausgebildet, deren Tiefe etwas kleiner als die Dicke der Membranen 5, 6 an deren Rand ist. Die zweite Leiterplatte 18, die beiden Ringe 16, 17 und die erste Leiterplatte 11 sind mittels durch die aufeinander abgestimmten Bohrungen gesteckter Schrauben zusammengeschraubt, wobei die in die Ringe 16, 17 eingelegten Membranen 5, 6 selbsttätig festgeklemmt werden. Die Membranen 5, 6 können jedoch auch in die Ringe 16, 17 gelötet oder geklebt sein. Der obere Ring 16 ist gegenüber dem unteren Ring 17 um den Winkel φ = 60° gedreht, so dass eine durchgehende Öffnung vom ersten Stutzen 14 bis zur ersten Druckkammer 1 und eine durchgehende Öffnung vom zweiten Stutzen 15 bis zur mittleren Druckkammer 10 gebildet sind. Diese Öffnungen sind gebildet durch die Bohrungen 12, 13, 19 und die Kerben 20. Dank der elliptischen Bohrung 13 in der ersten Leiterplatte 11 sind die vierte Druckkammer 4 und die erste Druckkammer 1 druckmässig verbunden. Auf der den Membranen 5, 6 zugewandten Seite der Leiterplatten 11 sind die erste bzw. zweite Spule 8, 9 angeordnet. Die elektrischen Anschlüsse der Spulen 8, 9 sind luftdicht durch die Leiterplatten 11, 18 auf die von den Druckkammern 1 bzw. 4 abgewandte Seite hindurchgeführt, so dass der Ring 17 auf der ganzen Fläche plan auf der Leiterplatte 11 aufliegt. Damit sind Dichtungsprobleme der Druckkammern 1, 4, 10 aufgrund von Leiterbahnen, die gegenüber der Leiterplatte 11 oder 18 ein wenig erhöht sind, ausgeschlossen. Die Dichtigkeit der Druckkammern 1 - 4 kann noch verbessert werden, indem nach der Montage etwas Silikonöl auf die Ringe 16, 17 aufgetragen wird.

Der beschriebene Differenzdrucksensor besteht aus äusserst wenig Einzelteilen und zeichnet sich durch einen einfachen kompakten Aufbau aus, was eine einfache Montage erlaubt. Die Ringe 16, 17 und die Membranen 5, 6 können zudem als beispielsweise verklebtes Teil vorgefertigt sein. Die Bauweise mit den übereinander angeordneten Druckkammern 1, 4 und 10 ist erstens platzsparend und zweitens wärmetechnisch vorteilhaft. Eine andere Bauweise, bei der die die beiden Druckkammern 1 und 2 umfassende erste Messzelle und die die beiden Druckkammern 3 und 4 (Fig. 1) umfassende zweite Messzelle nebeneinander angeordnet sind, wobei die Membranen 5, 6 entlang paralleler Achsen auslenkbar sind, wird weiter unten erläutert.

Die Dicke der Membrane 5 beträgt beispielsweise 15 Mikrometer. Bei Frequenzen von einigen Megahertz geht ein Teil des von der Spule 8 erzeugten Magnetfeldes durch die Membrane 5 hindurch und durchflutet auch die Membrane 6. Falls dieser Effekt zu Messfehlern führt, ist es vorteilhaft, zwischen die beiden Ringe 16 und 17 eine metallische Scheibe einzuklemmen, welche die von den Spulen 8 und 9 erzeugten Felder nicht durchdringen. Diese Scheibe weist gegen den Rand hin ein Loch auf, durch das der Druckausgleich auf beide Seiten der Scheibe erfolgt.

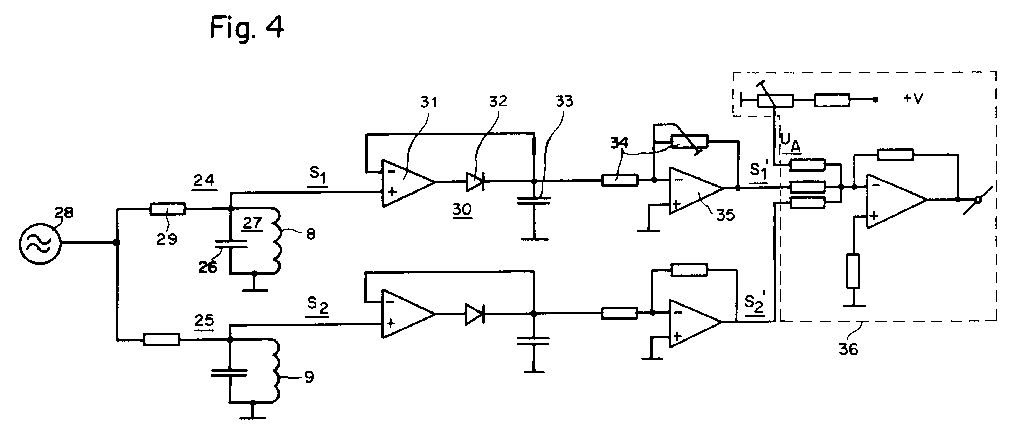

Die Fig. 4 zeigt eine elektronische Schaltung, die zum Betrieb der Spulen 8, 9 und zur Bildung des Summensignals S geeignet ist. Das Messprinzip beruht auf dem an sich bekannten Wirbelstromverfahren. Die Schaltung weist zwei parallele identische Signalpfade 24, 25 auf zum unabhängigen Betrieb der Spulen 8, 9, von denen einer im folgenden beschrieben ist. Die Spule 8 bildet mit einem Kondensator 26 einen Parallelresonanzkreis 27. Der Parallelresonanzkreis 27 wird mittels eines Oszillators 28 erregt. Zwischen den Oszillator 28 und den Parallelresonanzkreis 27 ist ein vergleichsweise hochohmiger Widerstand 29 geschaltet, so dass die beiden Signalpfade 24, 25 trotz gemeinsamem Oszillator 28 elektrisch annähernd getrennt sind. Die Amplitude der sich über dem Parallelresonanzkreis 27 einstellenden Wechselspannung $S_1$ wird mittels eines Peakdetektors 30, der aus einem Komparator 31, einer Diode 32 und einem Kondensator 33 besteht, gemessen und in einer nachfolgenden, aus Widerständen 34 und einem Operationsverstärker 35 gebildeten Verstärkerstufe verstärkt. Die Verstärkung und damit die Steilheit des weitgehend linearen Messsignals $S_1$ im Signalpfad 24 ist mittels des veränderbaren Widerstandes 34 einstellbar. Die am Ausgang der beiden Signalpfade 24, 25 anliegenden Signale S1 und S2 werden mit einer bekannten Additionsschaltung 36 summiert, wobei gleichzeitig ein bei verschwindendem Differenzdruck vorhandenes Nullpunktssignal subtrahiert wird. Der Kondensator 26 ist auf die aus Leiterbahnen bestehende Spule 8 so abgestimmt, dass die Resonanzfrequenz des Parallelresonanzkreises 27 etwa vier Megahertz beträgt. Die Frequenz des Oszillators 28 liegt in einer der beiden Flanken der Resonanzkurve des Parallelresonanzkreises 27.

Es sind natürlich auch andere Schaltungen denkbar, um das Signal S zu erhalten. Es ist beispielsweise möglich, beide Spulen 8, 9 in Reihe zu schalten und mit einem gemeinsamen Kondensator zu einem einzigen Resonanzkreis auszubilden.

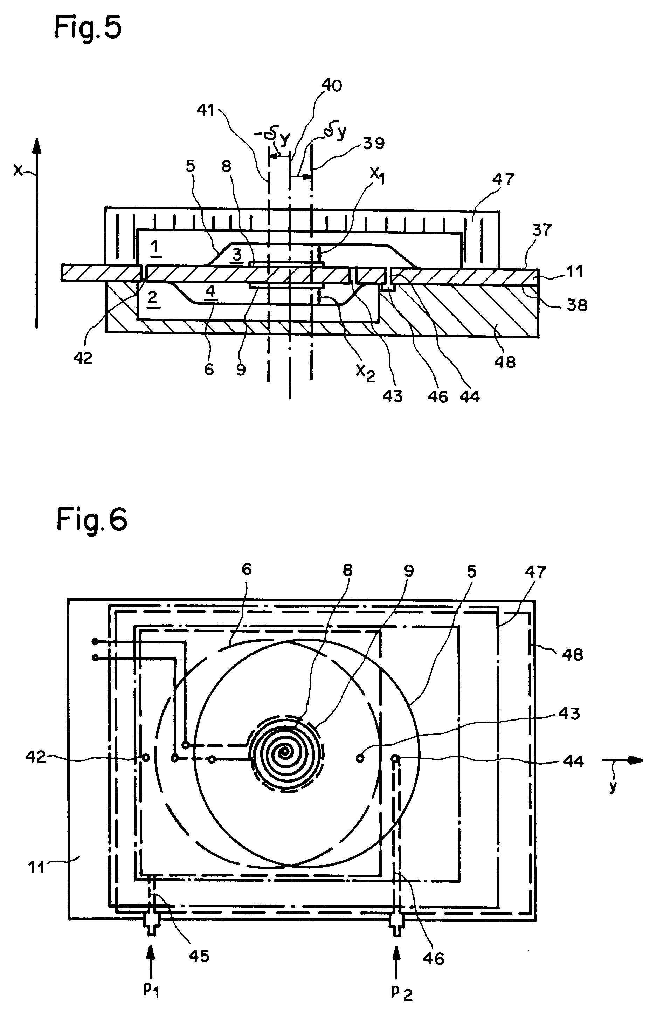

Die Fig. 5 und 6 zeigen einen Differenzdrucksensor, bei dem die Spule 8 auf der Oberseite 37 und die Spule 9 auf der Unterseite 38 der einzigen Leiterplatte 11 direkt übereinander angeordnet sind. Die Membrane 5 ist auf der Oberseite 37 über der Spule 8 angebracht, wobei die Symmetrieachse 39 der Membrane 5 gegenüber der gemeinsamen Symmetrieachse 40 der Spulen 8 und 9 in der Ebene der Leiterplatte 11 entlang einer Richtung y um eine Strecke $\delta y$ versetzt ist. Die Membrane 6 ist auf der Unterseite 38 über der Spule 9 angebracht, wobei die Symmetrieachse 41 der Membrane 6 gegenüber der Symmetrieachse 40 entlang der Richtung y um die Strecke $-\delta y$ versetzt ist. Auf die Oberseite 37 und die Unterseite 38 ist ein Kunststoffteil 47 bzw. 48 aufgeklebt, so dass zwischen den Membranen 5 und 6 und den Kunststoffteilen 47 bzw. 48 Druckkammern 1 bzw. 2 gebildet sind. Zwischen der Leiterplatte 11 und den Membranen 5 und 6 sind Druckkammern 3 bzw. 4 gebildet. Die Leiterplatte 11 weist drei von der Unterseite 38 zur Oberseite 37 führende Bohrungen 42, 43 und 44 auf. Die Bohrungen 42 und 44 sind über Kanäle 45 bzw. 46, die in die Unterseite 37 eingeritzt oder in das Kunststoffteil 48 eingeformt sind, mit seitlich angebrachten Druckanschlüssen verbunden. Die Druckkammern 1 und 2 sind durch die Bohrung 42 miteinander und den Kanal 45 mit dem Druckanschluss zur Zuführung des Druckes $p_1$ verbunden. Die Druckkammern 3 und 4 sind durch die Bohrung 43 miteinander und durch die Bohrung 44 und über den Kanal 46 mit dem Druckanschluss zur Zuführung des Druckes $p_2$ verbunden. In der Fig. 6 sind die Auflageflächen der Kunststoffteile 47 und 48 auf der Leiterplatte 11 mit gestrichelten Linien skizziert. Die Spule 9 ist nur angedeutet.

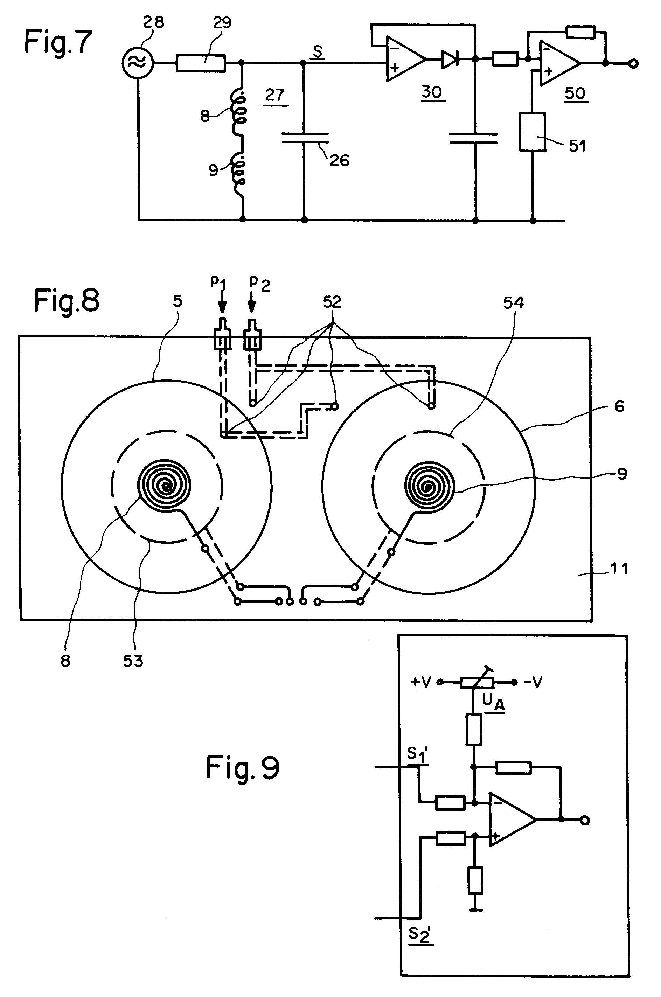

In physikalischer Betrachtungsweise stellen die beiden Spulen 8 und 9 eine einzige Spule dar, die durch die Membranen 5 und 6 bedämpft wird. Die Spulen 8 und 9 müssen den gleichen Wicklungssinn aufweisen, damit sich die von ihnen erzeugten Magnetfelder addieren. Bei entgegengesetztem Wicklungssinn würden sich die beiden Magnetfelder nämlich gegenseitig auslöschen. Der gewählte Aufbau mit den beidseitig der Leiterplatte 11 angebrachten Spulen 8 und 9 zeichnet sich durch eine hohe Symmetrie aus, indem die Membranen 5 und 6 bei verschwindendem Differenzdruck den gleichen Abstand $x_1 = x_2$ zu den Spulen 8 bzw. 9 aufweisen. Zur Erfassung der Auslenkung der Membranen 5 und 6 sind die Spulen 8 und 9, wie in der Fig. 7 gezeigt, mit Vorteil auch elektrisch in Reihe geschaltet. Als Messsignal wird z.B. die Bedämpfung der in Reihe geschalteten Spulen 8 und 9 gemessen.

Bei einer Änderung des Differenzdruckes $p_1 - p_2$ bewegen sich die Membranen 5 und 6 in entgegengesetzter y-Richtung, so dass die Bedämpfung beider Spulen 8 und 9 gleichermassen zu- oder abnimmt. Bei einer Änderung der Lage des Differenzdrucksensors bewegen sich die Membranen 5 und 6 aufgrund von Gravitationskräften hingegen in die gleiche y-Richtung, so dass die Bedämpfung der einen Spule 8 oder 9 zunimmt, während die Bedämpfung der anderen Spule 9 bzw. 8 abnimmt. Das Signal der in Reihe geschalteten Spulen 8 und 9 bleibt in diesem Fall unbeeinflusst.

Wegen der gegenseitigen Verschiebung der Membranen 5 und 6 um die Strecke $2*\delta y$ ist es möglich, die Druckkammern 3 und 4 auf einfache Weise mit dem Druck $p_1$ zu speisen, nämlich ohne dass eine Bohrung in der Ebene der Leiterplatte 11 erforderlich ist. Form und Grösse der Membranen 5 und 6 sind derart, dass die seitliche Versetzung um den Wert $\delta y$ gegenüber der entsprechenden Spule 8 bzw. 9 keine merkliche Signaländerung erzeugt. Die Spulen 8 und 9 sind elektrisch in Reihe geschaltet, wobei die in der Mitte der spiralförmigen Spulen liegende Spulenenden durch eine Durchkontaktierung der Leiterplatte 11 verbunden sind. Wegen der gegenseitigen Verschiebung der Membranen 5 und 6 ist es möglich, die anderen Spulenenden mittels weiterer Durchkontaktierungen 49 so zu verdrahten, dass die Flächen auf der Leiterplatte 11, auf denen die Membranen 5 und 6 entlang ihrem Rand festgeklebt sind, frei von Leiterbahnen sind, so dass keine Dichtungsprobleme und keine Kurzschlussprobleme entstehen können.

Die Membranen 5 und 6 sind mit Vorteil elektrisch geerdet, so dass sie einen Faradaykäfig bilden und die Spulen 8 und 9 gegen äussere, z.B. kapazitive, Störungen wirkungsvoll abschirmen.

Die Fig. 7 zeigt eine elektronische Schaltung, bei der die Spulen 8, 9 elektrisch in Reihe geschaltet sind. Die Spulen 8 und 9 bilden mit dem Kondensator 26 den Parallelresonanzkreis 27. Der Parallelresonanzkreis 27 wird mittels des Oszillators 28 erregt. Zwischen den Oszillator 28 und den Parallelresonanzkreis 27 ist der im Vergleich zur Impedanz des Parallelresonanzkreises 27 hochohmige 29 Widerstand geschaltet, so dass der Oszillator 28 und der Widerstand 29 eine Stromquelle bilden. Die Amplitude der sich über dem Parallelresonanzkreis 27 einstellenden Wechselspannung S wird mittels des Peakdetektors 30 gemessen und in der nachfolgenden Verstärkerstufe 50 verstärkt. Die Verstärkerstufe 50 weist einen Operationsverstärker auf, an dessen positivem Eingang eine von einem Schaltungsteil 51 erzeugte Spannung anliegt. Das Messprinzip dieser Schaltung ist gleich dem Messprinzip der in der Fig. 4 gezeigten Schaltung, es sind jedoch weniger Komponenten und kein Abgleich wie zwischen den Signalpfaden 24 und 25 (Fig. 4) nötig.

Der ohmsche Innenwiderstand der Spulen 8 und 9 ist temperaturabhängig. Da die durch den Oszillator 28 und den Widerstand 29 gebildete Stromquelle keine Konstantstromquelle ist, nimmt das von den Spulen 8 und 9 gelieferte Signal S mit zunehmender Temperatur ab. Diese Temperaturabhängigkeit wird elektronisch kompensiert, indem mittels des Schaltungsteils 51 eine Spannung mit einem negativen Temperaturkoeffizienten, beispielsweise eine von einer Diode oder einem Transistor abgeleitete Spannung, erzeugt und am positiven Eingang des Operationsverstärkers der Verstärkerstufe 50 angelegt wird.

Die Form der Membranen 5 und 6 ist auch temperaturabhängig und kann einen temperaturabhängigen Messfehler zur Folge haben. Ein Teil dieses Messfehlers kann mit der vorhin beschriebenen elektronischen Kompensation des Innenwiderstandes der Spulen 8 und 9 mitkompensiert werden. Die Fig. 8 zeigt nun einen Differenzdrucksensor, bei dem die temperaturabhängige Form der Membranen 5 und 6 keinen Messfehler verursacht. Die beiden Membranen 5 und 6 und die Spulen 8 und 9 sind auf der Oberseite der Leiterplatte 11 angeordnet. Das hier nicht gezeichnete Kunststoffteil 47 (Fig. 5) umschliesst die Membranen 5 und 6 und enthält zwei getrennte Aussparungen, so dass zwischen dem Kunststoffteil 47 und der Membrane 5 die erste Druckkammer und zwischen dem Kunststoffteil 47 und der Membrane 6 die zweite Druckkammer gebildet ist. Die dritte und die vierte Druckkammer sind zwischen den Membranen 5 bzw. 6 und der Leiterplatte 11 gebildet. Auf der Unterseite der Leiterplatte 11 ist das nicht gezeichnete Kunststoffteil 48 (Fig. 5) aufgeklebt. In das Kunststoffteil 48 sind wiederum Kanäle eingeritzt und derart mit in der Leiterplatte 11 angebrachten Bohrungen 52 verbunden, dass die erste und die vierte Druckkammer mit dem Druck $p_1$ und die zweite und die dritte Druckkammer mit dem Druck $p_2$ speisbar sind. Zur Messung des Differenzdruckes werden die von den Spulen 8 und 9 erzeugten Signale $S_1$ bzw. $S_2$ elektrisch entkoppelt verstärkt und zur Bildung der Differenz $S_1 - S_2$ einem Differenzverstärker zugeführt. Eine geeignete Schaltung lässt sich ähnlich wie die in der Fig. 4 dargestellte Schaltung aufbauen, wobei die Additionsschaltung 36 durch eine Differenzschaltung zu ersetzen ist. Eine geeignete Differenzschaltung zeigt die Fig. 9. Da der Operationsverstärker die Differenz der in den Signalpfaden 24 und 25 (Fig.4) verstärkten Signale $S_1'$ bzw. $S_2'$ bildet, wird zum Abgleich nur eine Spannung $U_A$ benötigt, die proportional zur Differenz $S_1' - S_2'$ ist, wenn der Differenzdruck $p_1 - p_2$ verschwindet. Bei der in der Fig.4 gezeigten Additionsschaltung 36 wird zum Abgleich eine Spannung $U_A$ benötigt, die proportional zur Summe $S_1' + S_2'$ bei verschwindendem Differenzdruck $p_1 - p_2$ ist.

Bei einer Änderung der Druckdifferenz $p_1 - p_2$ bewegen sich die beiden Membranen 5 und 6 in entgegengesetzter Richtung. Eine Änderung der Lage des Druckdifferenzsensors bzw. der Temperatur kann dazu führen, dass sich die Membranen 5 und 6 unter dem Einfluss der Gravitation bzw. der Temperatur leicht deformieren. Dabei ändert sich der Abstand zwischen den Membranen 5 und 6 und den Spulen 8 bzw. 9 in gleicher Weise, so dass die Differenzdruckmessung nicht beeinflusst wird.

Zur Erhöhung der Unempfindlichkeit des Differenzdrucksensors gegen äussere Einflüsse sind auf der Unterseite der Leiterplatte 11 mit Vorteil gegenüber jeder der Spulen 8 und 9 metallische Flächen 53 und 54 aufgebracht. Diese Flächen 53 und 54 sind wie die Spulen 8 und 9 und die Membranen 5 und 6 kreisrund und ihr Durchmesser ist etwas grösser als der Durchmesser der Spulen 8 und 9. Der Anschluss in der Mitte der Spulen 8 und 9 ist mittels einer Durchkontaktierung elektrisch mit der entsprechenden metallisierten Fläche 53 bzw. 54 verbunden. Die metallischen Flächen 53 und 54 und die Membranen 5 und 6 sind elektrisch geerdet und bilden um die Spulen 8 bzw. 9 Faradaykäfige.

Falls es notwendig ist, die Spulen 8 und 9 noch stärker gegen äussere Einflüsse abzuschirmen, um den Differenzdrucksensor unabhängig von der Umgebung zu machen, können die Kunststoffteile 47 und 48 auch durch metallische Gehäuseteile ersetzt werden, die dafür sorgen, dass die von den Spulen 8 und 9 erzeugten Magnetfelder das Gehäuse des Differenzdrucksensors nicht durchdringen.

Eine Zusammenfassung gibt die folgende schematische Tabelle, bei der eine Spule durch ihr elektrisches Symbol und eine Membrane durch einen Balken dargestellt sind. Der Abstand $x_1$ bezeichnet den absoluten Abstand zwischen der Membrane 5 und der Spule 8, der Abstand $x_2$ bezeichnet den absoluten Abstand zwischen der Membrane 6 und der Spule 9. Aus dieser Tabelle kann abgeleitet werden, welcher Druck $p_1$ bzw. $p_2$ welcher Druckkammer zuzuführen ist, damit die Änderungen $\delta x_1$ bzw. $\delta x_2$ der Abstände die in der vierten Kolonne geforderte Bedingung erfüllen. Weiter ist ersichtlich, wie das Messsignal S zu bilden ist.

| Anordnung der Membrane 5 relativ zur Spule 8 in Richtung der x-Achse | Anordnung der Membrane 6 relativ zur Spule 9 in Richtung der x-Achse | Änderung $dx_1$ bzw. $dx_2$ der Abstände $x_1$ und $x_2$ unter dem Einfluss der Gravitation, wenn die Lage des Sensors geändert wird | Änderung $\delta x_1$ bzw. $\delta x_2$ der Abstände $x_1$ und $x_2$ bei einer Änderung der Druckdifferenz $p_1 - p_2$ | Messsignal des Differenz-drucksensors |
|---|---|---|---|---|
| | | $dx_1 = dx_2$ | $\delta x_1 = -\delta x_2$ | $S = S_1 - S_2$ |
| | | $dx_1 = -dx_2$ | $\delta x_1 = \delta x_2$ | $S = S_1 + S_2$ |

**Patentansprüche**

1. Differenzdrucksensor zur Erfassung der Differenz von zwei Drücken $p_1$ bzw. $p_2$, mit einer ersten, entlang einer vorbestimmten Achse (7) auslenkbaren Membrane (5), wobei die Auslenkung der Membrane (5) abhängig von der Druckdifferenz $p_1 - p_2$ ist, und mit einer ersten Spule (8) zur Erzeugung eines Signals $S_1$, das proportional zur Auslenkung der Membrane (5) ist, **dadurch gekennzeichnet, dass** eine zweite, gleiche Membrane (6) vorhanden ist, die entlang der gleichen Achse (7) oder einer zu dieser Achse (7) parallelen Achse auslenkbar ist, und dass die zweite Membrane (6) die erste Spule (8) so beeinflusst, dass das Signal $S_1$ keine merkliche Änderung erfährt, wenn die beiden Membranen (5; 6) um den gleichen Wert $\delta x$ in die gleiche Richtung ausgelenkt werden.

2. Differenzdrucksensor zur Erfassung der Differenz von zwei Drücken $p_1$ bzw. $p_2$, mit einer ersten, entlang einer vorbestimmten Achse (7) auslenkbaren Membrane (5), wobei die Auslenkung der Membrane (5) abhängig von der Druckdifferenz $p_1 - p_2$ ist, und mit einer ersten Spule (8) zur Erzeugung eines Signals $S_1$, das proportional zur Auslenkung der Membrane (5) ist, **dadurch gekennzeichnet, dass** eine zweite, gleiche Membrane (6) vorhanden ist, die entlang der gleichen Achse (7) oder einer zu dieser Achse (7) parallelen Achse auslenkbar ist, dass eine zweite Spule (9) vorhanden ist zur Erzeugung eines Signals $S_2$, das proportional zur Auslenkung der zweiten Membrane (6) ist, und dass aus den Signalen $S_1$ und $S_2$ ein Signal $S$ gebildet wird, das keine merkliche Änderung erfährt, wenn die beiden Membranen (5; 6) um den gleichen Wert $\delta x$ in die gleiche Richtung ausgelenkt werden.

3. Differenzdrucksensor nach Anspruch 2, **dadurch gekennzeichnet, dass** die Spulen (8; 9) elektrisch in Reihe geschaltet sind und dass das Signal $S$ proportional ist zur Summe $S_1 + S_2$.

4. Differenzdrucksensor nach Anspruch 2, **dadurch gekennzeichnet, dass** das Signal $S$ proportional ist zur Differenz $S_1 - S_2$.

5. Differenzdrucksensor nach einem der Ansprüche 1 bis 4, **dadurch gekennzeichnet, dass** die Spule (8) bzw. die Spulen (8; 9) auf einer Leiterplatte (11) angeordnet sind, dass die Membranen (5; 6) mit der Leiterplatte (11) und mit weiteren Teilen (47; 48) Druckkammern (1-4) bilden und dass die Drücke $p_1$ bzw. $p_2$ den Druckkammern (1-4) über Kanäle (45; 46), die in die weiteren Teile (47; 48) eingeformt oder in die Leiterplatte (11) eingeritzt sind, und/oder in der Leiterplatte (11) angebrachte Bohrungen (42; 43; 44), die von der Unterseite (38) zur Oberseite (37) der Leiterplatte (11) führen, zuführbar sind.

6. Differenzdrucksensor nach Anspruch 5, **dadurch gekennzeichnet, dass** die Leiterbahnen, die die Spule (8) bzw. die Spulen (8; 9) mit der das Signal $S$ bildenden Schaltung verbinden, so über die Oberseite (37) und die Unterseite

6

(38) der Leiterplatte (11) geführt sind, dass die Membranen (5; 6) nicht auf diesen Leiterbahnen aufliegen.

7. Differenzdrucksensor nach einem der Ansprüche 1 bis 6, **dadurch gekennzeichnet, dass** die Auslenkung der zweiten Membrane (6) ebenfalls abhängig von der Druckdifferenz $p_1$ - $p_2$ ist.

8. Differenzdrucksensor nach einem der Ansprüche 1 bis 7, **dadurch gekennzeichnet, dass** die Temperaturabhängigkeit des Innenwiderstandes der Spule (8) bzw. der Spulen (8; 9) elektronisch kompensiert wird.

9. Differenzdrucksensor nach einem der Ansprüche 1 bis 8, **dadurch gekennzeichnet, dass** die Membranen (5; 6) elektrisch geerdet sind.

Fig.1

Fig.2

Fig. 3

Fig. 4

EP 0 774 651 A2

## Fig.5

## Fig.6

Fig.7

Fig.8

Fig.9